# EUROPEAN PATENT SPECIFICATION

(11) **EP 3 096 870 B1**
(45) Date of publication and mention of the grant of the patent: **27.09.2017**
(21) Application number: 15701128.9
(22) Date of filing: 16.01.2015
(51) Int. Cl.: B01J 20/00, C01F 7/02, C09C 1/40, B01J 20/08, B01J 20/28, B01J 20/30, C02F 1/28, C02F 101/10, C02F 101/14

(54) **A METHOD OF MODIFYING SURFACE CHARACTERISTICS OF ALUMINA**
VERFAHREN ZUR MODIFIZIERUNG DER OBERFLÄCHENEIGENSCHAFTEN VON ALUMINIUMOXID
PROCÉDÉ DE MODIFICATION DES CARACTÉRISTIQUES DE SURFACE D'ALUMINE

(30) Priority: 22.01.2014 EP 14152046
(43) Date of publication of application: 30.11.2016
(73) Proprietor: Unilever N.V., 3013 AL Rotterdam (NL); Unilever PLC, London, Greater London EC4Y 0DY (GB)
(72) Inventor: BARUWATI, Babita, Bangalore 560 066 (IN); MAHAPATRA, Samiran, Bangalore 560 066 (IN); SARKAR, Ayan, Bangalore 560 066 (IN); SOMASUNDAR, Yogesh, Bangalore 560 066 (IN)
(74) Representative: van den Brom, Coenraad Richard
(86) International application number: PCT/EP2015/050733
(87) International publication number: WO 2015/110352

(56) References cited:
- WO-A1-2012/034822
- US-A- 5 133 871
- US-B2- 7 674 525

## Description

### Field of the invention

The invention relates to a method of modifying surface characteristics of alumina using certain compounds of Aluminium. The resultant material is useful for purifying water containing contaminants like fluorides and Arsenic.

### Background of the invention

Ground water is generally contaminated with contaminants like Arsenic and fluorides. Arsenic poisoning causes high mortality and morbidity in some parts of the world. Some of the worst-affected areas have as high as 300 ppb Arsenic in ground water. The WHO and USEPA recommend a maximum limit of 10 ppb Arsenic in potable water. US5133871 (Levy) discloses a method to treat the surface of alumina particles in view of their use as water purification compounds which comprises: - preparing an aqueous mixture of Alumina at a pH ranging from 4 to 6.5, - adding a 0,01 molar solution of hydrochloric acid - mixing the two solutions while adjusting the pH and - drying the mixture so as to obtained a surface modified alumina. JP2002079015A (Winchester, et al.) discloses a filter medium having fired diatomaceous earth and 5 to 30% by weight of ferric ions bonded to the diatomaceous earth. The material is useful for purification of water containing Arsenic.

WO2006069712 A1 (Unilever) discloses a process for filtering water in which water is passed through a filter medium having 1 to 20 wt% pre-hydrolyzed positively charged multivalent metallic species such as aluminium, iron, zinc, calcium or magnesium adsorbed on a solid substrate wherein the species has -OH to metal ratio from 0.5 to 3. The invention also concerns filter media comprising treating a solid substrate with an aqueous solution of a pre-hydrolyzed positively charged multivalent metallic species and an additional biocide provides highly effective removal of microorganisms, dissolved organics and particulate impurities.

In KR20020070533A (KWAK JONG WOON) is disclosed an activated carbon impregnated with inorganic coagulant containing a copper component. The activated carbon is prepared by impregnating an inorganic coagulant into activated carbon in an amount that metal component in the inorganic coagulant is impregnated within the range of 0.05-10.0 weight percent into activated carbon, The inorganic coagulant includes aluminum chloride, aluminum sulfate, poly aluminum sulfated, poly aluminum chloride and aluminum nitrate.

WO00/13764 A1 (Lukasik et al. 2000) describes a method of filtering a fluid comprising the steps of in-situ precipitating at least one metallic (hydr)oxide onto the filter matrix; and bringing the filter matrix in contact with a fluid, wherein removal of at least one impurity from the fluid is enhanced by the application of the at least one metallic (hydr)oxide to the filter matrix. In this publication, metallic chlorides e.g. aluminium chloride or ferric chloride is applied on to a substrate e.g. sand and the metallic hydroxide is precipitated on to the sand by applying a large excess of base solution e.g. ammonium hydroxide, at elevated temperature. This causes precipitation of completely hydrolysed metallic hydroxides on to a substrate for filtration of water.

WO2009010376 A1 (Unilever) discloses a composition and a process for purification of contaminated water in which a flocculation/disinfection composition having certain double layered hydroxides which contain at least one selected divalent cation and at least one selected trivalent cation provides for enhanced arsenic removal.

The literature is replete with various kinds of filter media for purifying water containing Arsenic and fluorides.

### Summary of the invention

We have now determined a method for modifying surface characteristics of alumina providing modified alumina having greater adsorption capacity towards Arsenic and fluorides.

In accordance with a first aspect is disclosed a method of modifying surface characteristics of alumina, said method comprising the steps of:
(i) forming an aqueous mixture comprising one part by weight of alumina and a monomeric or polymeric compound of Aluminium equivalent to 0.001 to 0.1 parts by weight of Aluminium content;
(ii) equilibrating the mixture for at least five minutes;
(iii) increasing pH of the mixture to 6 to 8; and,
(iv) drying the mixture,
where said method comprises an additional step of increasing pH of the mixture to 3.0 to 5.0 between steps (i) and (ii) when said compound of Aluminium is monomeric.

In accordance with a second aspect is disclosed alumina having modified surface characteristics obtainable by a method of the first aspect.

### Detailed description of the invention

The first step of the disclosed method of modifying surface characteristics of alumina is forming an aqueous mixture having one part by weight of alumina and a monomeric or polymeric compound of Aluminium equivalent to 0.001 to 0.1 parts by weight of Aluminium content. The next step is allowing the mixture to equilibrate for at least five minutes. More preferably the mixture is allowed to equilibrate for 15 to 120 minutes. The third step is increasing the pH of the mixture to 6 to 8. The final step is drying the mixture leading to alumina with modified surface characteristics. In the case where the compound of Aluminium is monomeric, the method includes an additional step in which the pH of the mixture is raised to 3.0 to 5.0, preferably 3.5 to 4.5. This additional step is to be followed between the steps (i) and (ii). Therefore, in other words, the steps (i) to (iv) need to be followed regardless of whether the compound of Aluminium is monomeric or polymeric. However, only when the compound of Aluminium is monomeric is there an additional step of increasing pH of the mixture to 3.0 to 5.0 which is to be followed after formation of the aqueous mixture but before equilibration.

Thus in case of monomeric compounds of Aluminium, the pH is increased in two stages by the addition of an alkali. In the first stage, some polymeric character is introduced on the surface of alumina which subsequently allows for precipitation when the pH is increased to 6 to 8. Between these two stages is a step of equilibration which allows surface reactions between the alumina and the polymeric moeties.

Where the compound of Aluminium is polymeric, the method includes a one-stage addition of alkali in which the pH is increased to 6 to 8.

In the broader method the aqueous mixture has one part by weight of alumina and a monomeric or polymeric compound of Aluminium equivalent to 0.001 to 0.1 parts by weight of Aluminium content. In a preferred method the aqueous mixture includes monomeric or polymeric compound of Aluminium equivalent to 0.01 to 0.05 parts by weight of Aluminium content. The preferred method provides modified alumina having greater adsorption capacity towards Arsenic and fluorides.

In a preferred embodiment of the method, Aluminium is added as an aqueous solution. In such a case, the ratio of alumina to water is in the range of 1:0.1 to 1:5, more preferably 1:0.2 to 1:2. Preferably the compound of Aluminium is added in the form of an aqueous solution. The amount of water to be taken generally depends on the amount of alumina, which preferably is just enough to completely soak the alumina.

The mixture is dried preferably by air drying at 30 °C to 40 °C in an oven with air circulation and preferably for 6 to 12 hours. Further preferably the dried material is thoroughly washed with deionised water and dried again similarly.

### Description of alumina:

Alumina is a commercially available material with varying zeta potential (negative to positive) depending on the synthetic route and other factors. It is believed that the method disclosed herein modifies the surface characteristics of alumina by enhancing the surface charge thereof which may also be stated as modification from negative surface charge to positive surface charge or from any positive surface charge to positive surface charge of higher degree.

It is preferred that the surface area of alumina is from 100 to 400 m²/g, more preferably from 200 to 400 m²/g and most preferably 300 to 340 m²/g.

It is preferred that the pore volume of alumina is 0.4 to 0.7 cc/g, preferably 0.4 to 0.6 cc/g and most preferably 0.4 to 0.5 cc/g units.

The particle size of alumina is preferably in the range of 0.05 mm to 2 mm. More preferably it is 0.25 mm to 0.6 mm.

It is also further preferred that the surface charge of the alumina is at least - 40 mV (i.e., minus 40 mV). More preferably the surface charge is in the range of -30 to +30 mV.

While not wishing to be bound by theory it is believed that the negatively charged oxo anions arsenate and arsenite are attracted towards the positive surface charge of alumina having modified surface characteristics.

Fluoride ions are exchangeable with replaceable -OH groups which are present on the surface of some materials as their charges and sizes are almost the same. It is believed that modification of the surface characteristics of alumina leads to an increase in the surface hydroxyl groups which results in improved adsorption characteristics.

### Description of the compound of Aluminium

The compound of Aluminium may be monomeric or polymeric. It is preferred that the solubility of the compound of aluminium is at least 2 mg/100 g water at 20 °C at 1 atmosphere pressure.

Preferred monomeric compound of Aluminium are Aluminium chloride, Aluminium nitrate or Aluminium sulphate.

Disclosed compound of Aluminium can be generally defined by the formula:

Alₘ(OH)ₙ(X)_{(3m-n)/q}

Here, q is the charge of anion X, and typically 0< n/m < 3.

X can be one type of anion or a combination of anions. Suitable examples of these ions include Chloride, Sulphate, and Silicate.

The degree of neutralization of a pre-hydrolysed aluminium compound is represented by B value. B value is a molar ratio of OH content to Al content of the prehydrolysed aluminium compound. It is preferred that the "B value" of the polymeric compound of Aluminium is 0.1 to 2.8. More preferably it is 0.5 to 2.5. A pre-hydrolyzed compound or species is defined as a compound/species wherein the hydrolysis ratio, or the "B value" which is also indicated as "[OH]/[M] value" is greater than 0 but less the valency of the metal ion (M is the metal ion having a valency "n" which is "3" for Aluminium). "B" value does not have units. Therefore, for the purpose of the present invention and as an example, the "B" value can also be indicated as OH⁻/Al³⁺ ratio.

Preferred polymeric compounds of Aluminium are Polyaluminium chloride, Polyaluminium sulphate, Aluminium chlorohydrate or Polyaluminium chlorosulphate.

Polyaluminium chloride is the most preferred. Also preferred is Aluminium chlorohydrate.

It is further preferred that basicity of the compound of Aluminium is at least 40%. Preferably it is in the range of 45 % to 100 %. Basicity is an important feature of Aluminium compounds, especially Polyaluminium compounds. It is directly proportional to the degree of hydrolysis and also the "B" value. The basicity is linked to B value and is directly proportional to B value of the compound.
In literature the basicity is calculated as ,
Basicity of a pre-hydrolyzed aluminium compound= B*100/3

Particularly preferred prehydrolysed aluminium compounds and their respective "B" values are as follows:
AlOH²⁺ 1.0; Al (OH) ₂⁺ 2.0; Al₂(OH)₂⁴⁺ 1.0; Al₂(OH)₂⁴⁺ 1.0; Al₃(OH)₄⁵⁺ 1.33 ; Al₇(OH)₁₇⁴⁺ 2.43; Al₁₃(OH)₃₂⁷⁺ 2.46; Al₆(OH)₁₅³⁺ 2.50 and Al₁₃(OH)₃₄⁵⁺ whose "B" vaule is 2.62.

For brevity, the water molecules and oxide ligands have been omitted.

Aluminium hydrolyses in water through a complex mechanism and generates a series of monomeric and polymeric partially hydrolyzed species before precipitating as a hydroxide.

Basicity is a major factor in determining the molecular species distribution; low-basicity favors low molecular weight species and high-basicity favors high molecular weight species. Temperature and concentration also effect the molecular species distribution but in less predictable ways. High basicity products have a higher positive charge and are more efficient in coagulating negatively charged contaminants.

### Use of the alumina with modified surface characteristics:

The alumina having modified surface characteristics can be used for water purification either in free form or in the form of a bound block. It is well known that addition of thermoplastic or thermoset materials in powder, particulate, or fiber form assist in binding the particles of a filter medium and the alumina can serve as a filter medium. This binder may include any of following types such as polyolefins, polyvinyl halides, polyvinyl esters, polyvinyl ethers, polyvinyl alcohols, polyvinyl sulfates, polyvinyl phosphates, polyvinyl amines, polyamides, polyimides, polyoxidiazoles, polytriazols, polycarbodiimides, polysulfones, polycarbonates, polyethers, polyarylene oxides, polyesters, polyarylates, phenol-formaldehyde resins, melamine-formaldehyde resins, formaldehyde-ureas, ethyl-vinyl acetate copolymers, co-polymers and block interpolymers thereof, and combinations thereof. Variations of the above materials and other useful polymers include the substitution of groups such as hydroxyl, halogen, lower alkyl groups, lower alkoxy groups, monocyclic aryl groups, and the like. Other potentially applicable materials include polymers such as polystyrenes and acrylonitrile-styrene copolymers, styrene-butadiene copolymers, and other non-crystalline or amorphous polymers and structures.

Preferred binders include end-capped polyacetals, such as poly(oxymethylene) or polyformaldehyde, poly(trichloroacetaldehyde), poly(n-valeraldehyde), poly(acetaldehyde), and poly(propionaldehyde); acrylic polymers, such as polyacrylamide, poly(acrylic acid), poly(methacrylic acid), poly(ethyl acrylate), and poly(methyl methacrylate); fluorocarbon polymers, such as poly(tetrafluoroethylene), perfluorinated ethylene-propylene copolymers, ethylene-tetrafluoroethylene copolymers, poly(chlorotrifluoroethylene), ethylene-chlorotrifluoroethylene copolymers, poly(vinylidene fluoride), and poly(vinyl fluoride); polyamides, such as poly(6-aminocaproic acid) or poly(.epsilon.-caprolactam), poly(hexamethylene adipamide), poly(hexamethylene sebacamide), and poly(11-aminoundecanoic acid); polyaramides, such as poly(imino-1,3-phenyleneiminoisophthaloyl) or poly(m-phenylene isophthalamide); parylenes, such as poly-2-xylylene, and poly(chloro-1-xylylene); polyaryl ethers, such as poly(oxy-2,6-dimethyl-1,4-phenylene) or poly(p-phenylene oxide); polyaryl sulfones, such as poly(oxy-1,4-phenylenesulfonyl-1,4-phenyleneoxy-1,4-phenyl-eneisopropylid- e ne-1,4-phenylene), and poly(sulfonyl-1,4-phenylene-oxy-1,4-phenylenesulfonyl-4,4'-biphenylene); polycarbonates, such as poly-(bisphenol A) or poly(carbonyldioxy-1,4-phenyleneisopropylidene-1,4-phenylene); polyesters, such as poly(ethylene terephthalate), poly(tetramethylene terephthalate), and poly(cyclohexylene-1,4-dimethylene terephthalate) or poly(oxymethylene-1,4-cyclohexylenemethyleneoxyterephthaloyl); polyaryl sulfides, such as poly(p-phenylene sulfide) or poly(thio-1,4-phenylene); polyimides, such as poly(pyromellitimido-1,4-phenylene); polyolefins, such as polyethylene, polypropylene, poly(1-butene), poly(2-butene), poly(1-pentene), poly(2-pentene), poly(3-methyl-1-pentene), and poly(4-methyl-1-pentene); vinyl polymers, such as poly(vinyl acetate), poly(vinylidene chloride), and poly(vinyl chloride); diene polymers, such as 1,2-poly-1,3-butadiene, 1,4-poly-1,3-butadiene, polyisoprene, and polychloroprene; polystyrenes; and copolymers of the foregoing, such as acrylonitrilebutadiene-styrene (ABS) copolymers. Polyolefin based materials are advantageous. Polyolefin powders, such as MICROTHENE^{®} of Equistar Chemicals, LP of Houston, Tex., and the like, may be used. These powders comprise ultra-fine, spherically shaped particles with narrow size distribution suitable for use in a broad range of specialty applications. Polyolefin powders combine the unique properties of a polyolefin resin with a microfine particle size.

Polyolefin powders are typically added to certain thermoplastic and thermosetting resins to improve surface appearance, dimensional stability and extrudability or shrinkage characteristics. Generally, by adding one percent to six percent by weight polyolefin powder the resin filler distribution, mold flow, and moisture resistance, are improved while strength properties are successfully retained.

When used, the content of binder in a bound filter could range from 10% to 40% by weight, more preferably 15% to 25% by weight. It is desirable that the binder has softening point significantly lower than softening point of the alumina so that the core filter media/binder combination can be heated to activate the binder material, while the microporous structure of alumina does not melt and lose its porosity.

### Description of test methods used to test the technical benefits of the alumina:

The following methods were used for qualitative/quantitative analysis of Arsenic and fluorides:

### Total Arsenic content:

Inductively coupled plasma-optical emission spectroscopy (ICP-OES) (Varian-Vista-PRO) was used to measure the total Arsenic concentration (> 50 ppb) in the solution. Concentrations lower than 50 ppb were analyzed by inductively coupled plasma- mass spectrometry (ICP-MS) (Eldrin 9000). In both the analytical methods the samples were injected in the machines without any pre-concentration or pre-dilution and the total Arsenic concentrations were measured.

### Arsenic removal capacity by adsorption:

100 ml solutions of Sodium arsenate were prepared containing varying Arsenic concentrations (2, 4, 7 and 10 ppm Arsenic concentration) in deionised water. Then 0.1 gram of the material was added to each solution and the mixture was stirred for 1 hour using a magnetic stirrer at room temperature for equilibration. Then the mixture was filtered using Whatman quantitative filter paper and concentration of Arsenic was measured in the filtrate.

### Total fluoride content:

The concentrations of fluoride in the samples were determined using a Thermo scientific fluoride ion selective probe having measureable range of 0 to 1000 ppm. The samples were analyzed in the instrument without any pre-concentration or pre-dilution and the total fluoride concentrations were measured.

### Fluoride removal capacity by adsorption:

100 ml solutions of Sodium arsenate were prepared containing varying fluoride concentrations (0, 20, 50 and 100 ppm fluoride concentration) in deionised water. Then 0.1 gram of the material was added to each solution and the mixture was stirred for 1 hour using a magnetic stirrer at room temperature for equilibration. Then the mixture was filtered using Whatman^{®} quantitative filter paper and concentration of fluorides was measured in the filtrate.

### Examples

The invention will now be explained with reference to the following non-limiting examples.

All raw materials were procured from standard suppliers and used without further treatment unless specified otherwise.

Specifications of alumina are given in table 1.

**TABLE 1**

| Parameters | Value |
|---|---|
| BET surface area (m²/g) | 280 |
| Pore volume in cc/g | 0.28 |
| Particle size/mm | 0.1 to 0.4 |
| Surface charge/mV | -15 to -20 |

The alumina was washed with water until pH of the wash liquor reached 7.5 ± 0.5. The washed material was dried in an oven at 100 °C. This material was used as the starting material for examples 1 and 2.

### Example 1: Method using a polymeric compound of Aluminium

Polyaluminium chloride (PAC) with basicity of 80 to 85% was used for modifying the surface of alumina having specifications as shown in table 1.

PAC was dissolved in about 40 ml water. An aqueous mixture of alumina and polyaluminium chloride was prepared. It was allowed to equilibrate for 100 minutes. Thereafter, dilute sodium hydroxide solution was added to the mixture with constant mixing until the pH of the mixture reached 6.5 to 6.7. The modified alumina was then air dried at 35 °C for about 6 to 12 hours. The air-dried material was thoroughly washed with deionised water and the washed material was air dried again at 35 °C for about 6 to 12 hours.

Three different experiments (1A, 1B and 1C) were conducted using a fixed quantity of alumina but varying quantities of the PAC. Details are shown in table 2.

**TABLE 2**

| Example | Mass of alumina/g | Mass of PAC/g | Aluminium content in the PAC in parts/weight for every part/weight of alumina | Aluminium loading as the % of alumina |
|---|---|---|---|---|
| 1A | 50 | 1 | 1:0.003 | 0.3 |
| 1B | 50 | 5 | 1:0.015 | 1.5 |
| 1C | 50 | 10 | 1:0.03 | 3 |

Use of the modified aluminas of Example 1 for purification of water containing fluorides

This experiment was performed using 100 ml test solutions with varying fluoride concentrations and 0.1 g alumina having modified surface characteristics as indicated in table 2. The data is also included in table 3.

**TABLE 3**

| Material | Input fluoride concentration/ppm | Output fluoride concentration/ppm | Adsorption capacity (mg/g) |
|---|---|---|---|
| Untreated alumina | 10 | 7 | 3 |
| | 20 | 16 | 3 |
| | 50 | 44 | 6 |
| | 100 | 92 | 8 |
| Example 1B | 10 | 2 | 8 |
| | 20 | 8 | 12 |
| | 50 | 32 | 18 |
| | 100 | 76 | 24 |
| Example 1A | 10 | 6 | 4 |
| | 100 | 89 | 11 |
| Example 1C | 10 | 1.8 | 8.2 |
| | 100 | 76 | 24 |

The data in table 3 indicates that Example 1B had optimal loading of Aluminium as supported by the adsorption capacity. Example 1A's results were comparable to untreated alumina whereas Example 1C showed only marginal improvement over Example 1B. The preferred Example-1B shows significant improvement as compared to untreated alumina as well as over Example 1A.

### Use of the modified aluminas for purification of water containing Arsenic

This experiment was performed using 100 ml test solutions with varying Arsenic concentrations and 0.1 g alumina having modified surface characteristics as indicated in table 2. The data is also included in table 4.

**TABLE 4**

| Material | Input As concentration/ppm | Output As concentration/ppm | Adsorption capacity (mg/g) |
|---|---|---|---|
| Untreated alumina | 2 | 0.5 | 0.5 |
| | 4 | 3 | 1 |
| | 7 | 5 | 2 |
| | 10 | 7 | 3 |
| Example 1B | 2 | 0.05 | 2 |
| | 4 | 0.06 | 4 |
| | 7 | 0.15 | 7 |
| | 10 | 0.5 | 9.5 |
| Example 1A | 2 | 1 | 1 |
| | 10 | 6.5 | 3.5 |
| Example 1C | 2 | 0.05 | 2 |
| | 10 | 0.05 | 10 |

The data in table 4 shows a trend similar to that of table 3. Example 1A provided results comparable to untreated alumina whereas Example 1C showed only marginal improvement over Example 1B. However Example 1B showed significant improvement over untreated alumina as well as over Example 1A.

### Example 2: Method using monomeric compound of Aluminium

Aluminium chloride was used for modifying the surface of alumina having specifications as previously shown in table 1.

Aluminium chloride was dissolved in about 40 ml water. An aqueous mixture of alumina and Aluminium chloride was prepared. It was allowed to equilibrate for 100 minutes. Thereafter, dilute sodium hydroxide solution was added to the mixture with constant mixing until the pH of the mixture reached 4.0. Mixture was equilibrated again for 70 minutes. The pH was increasing further to 6.8. The modified alumina was then air dried at 35 °C for about 6 to 12 hours. The air-dried material was thoroughly washed with deionised water and the washed material was air dried again at 35 °C for about 6 to 12 hours.

Three different experiments (2A, 2B and 2C) were conducted using a fixed quantity of alumina but varying quantities of the PAC. Details are shown in table 5.

**TABLE 5**

| Example | Alumina content/g | Grams of Al Chloride Hexahydrate used to prepare the solution | Ratio of alumina to the Al content in the compound of Al | % Al loading |
|---|---|---|---|---|
| 2A | 50 | 1.34 | 1:0.003 | 0.3 |
| 2B | 50 | 6.7 | 1:0.015 | 1.5 |
| 2C | 50 | 13.4 | 1:0.03 | 3 |

### Comparative Example: One step pH increase for the method using monomeric compound of Aluminium

Aluminium chloride was dissolved in about 40 ml water. An aqueous mixture of alumina and Aluminium chloride was prepared. It was allowed to equilibrate for 100 minutes. Thereafter, dilute sodium hydroxide solution was added (in a single stage) to the mixture with constant mixing until the pH of the mixture reached 6.8. The modified alumina was then air dried at 35 °C for about 6 to 12 hours. The air-dried material was thoroughly washed with deionised water and the washed material was air dried again at 35 °C for about 6 to 12 hours.

### Use of the modified aluminas of Example 2 for purification of water containing fluorides

This experiment was done as per the procedure described earlier. Data is shown in table 6.

**TABLE 6**

| Material | Input fluoride concentration/ppm | Output fluoride concentration/ppm | Adsorption capacity (mg/g) |
|---|---|---|---|
| Untreated alumina | 10 | 7 | 3 |
| | 20 | 16 | 3 |
| | 50 | 44 | 6 |
| | 100 | 92 | 8 |
| Example 2B | 10 | 2.5 | 7.5 |
| | 20 | 9 | 11 |
| | 50 | 34 | 16 |
| | 100 | 78 | 22 |
| Example 2A | 10 | 6.5 | 3.5 |
| | 100 | 90 | 10 |
| Example 2C | 10 | 2 | 8 |
| | 100 | 77 | 23 |

The data indicates that modified alumina of Example 2B had the optimal loading of Aluminium which is supported by the adsorption capacity. Example 2A provided results comparable to untreated alumina whereas Example 2C showed only marginal improvement over Example 2B. However, it is clear that preferred Example-2B showed significant improvement as compared to untreated alumina as well as over Example 2A. Additionally it also indicates that the stepwise alkali addition of alkali to increase the pH provides a material which is performance-wise equivalent to the material obtained by using a polymeric compound of Aluminium.

### Use of the modified aluminas of Example 2 for purification of water containing Arsenic

This experiment was done as per the procedure described earlier. Data is shown in table 7.

**TABLE 7**

| Material | Input As concentration/ppm | Output As concentration/ppm | Adsorption capacity (mg/g) |
|---|---|---|---|
| Untreated alumina | 2 | 0.5 | 0.5 |
| | 4 | 3 | 1 |
| | 7 | 5 | 2 |
| | 10 | 7 | 3 |
| Example 2B | 2 | 0.05 | 2 |
| | 4 | 0.1 | 3.9 |
| | 7 | 0.2 | 6.8 |
| | 10 | 1 | 9 |
| Example 2A | 2 | 1 | 1 |
| | 10 | 6.8 | 3.2 |
| Example 2C | 2 | 0.05 | 2 |
| | 10 | 0.5 | 9.5 |

This data shows a trend similar to table 6. Modified alumina of Example 2B had the optimal loading of Aluminium. Example 2A provided results comparable to untreated alumina whereas Example 2C showed only marginal improvement over the results of Example 2B. However, it is clear that preferred Example-2B showed significant improvement as compared to untreated alumina as well as over Example 2A.

### Example 3: Purification of water containing (i) fluorides and (ii) Arsenic Modified alumina of Example 2B v/s the Comparative Example)

The performance of the modified aluminas of Example 2B was compared against alumina obtained by the Comparative Example. This is basically comparison of one-stage increase of pH against 2-stage increase of pH in the case of monomeric compound of Aluminium. The data is shown in table 8.

**TABLE 8**

| Material | Input fluoride concentration/ppm | Output fluoride concentration/ppm | Adsorption capacity (mg/g) |
|---|---|---|---|
| Example 2B | 10 | 2.5 | 7.5 |
| | 20 | 9 | 11 |
| | 50 | 34 | 16 |
| | 100 | 78 | 22 |
| Comparative Example | 10 | 4 | 6 |
| | 20 | 11 | 9 |
| | 50 | 37 | 13 |
| | 100 | 83 | 17 |

| | Input As concentration/ppm | Output As concentration/ppm | Adsorption capacity (mg/g) |
|---|---|---|---|
| Example 2B | 2 | 0.05 | 2 |
| | 4 | 0.1 | 3.9 |
| | 7 | 0.2 | 6.8 |
| | 10 | 1 | 9 |
| Comparative Example | 2 | 0.2 | 1.8 |
| | 4 | 1 | 3 |
| | 7 | 2.5 | 4.5 |
| | 10 | 4 | 6 |

The data in table 8 clearly indicates superiority of Example 2B.

## Claims

1. A method of modifying surface characteristics of alumina, said method comprising the steps of:
(i) forming an aqueous mixture comprising one part by weight of alumina and a monomeric or polymeric compound of Aluminium equivalent to 0.001 to 0.1 parts by weight of Aluminium content;
(ii) equilibrating the mixture for at least five minutes;
(iii) increasing the pH of the mixture to 6 to 8; and,
(iv) drying said mixture,
where said method comprises an additional step of increasing the pH of the mixture to 3.0 to 5.0 between steps (i) and (ii) when said compound of Aluminium is monomeric.

2. A method as claimed in any one of the preceding claims wherein solubility of said monomeric or polymeric compound of Aluminium is at least 2 mg/100 g water at 20 °C at 1 atmosphere pressure.

3. A method as claimed in claim 1 or 2 wherein said monomeric compound of Aluminium is Aluminium chloride, Aluminium nitrate or Aluminium sulphate.

4. A method as claimed in any one of the preceding claims wherein said aqueous mixture comprises monomeric or polymeric compound of Aluminium equivalent to 0.01 to 0.05 parts by weight of Aluminium content.

5. A method as claimed in any one of the preceding claims wherein particle size of said alumina is 0.05 mm to 2 mm.

6. A method as claimed in any one of the preceding claims wherein surface charge of said alumina is at least -40 mV.

7. A method as claimed in any one of the preceding claims wherein B value of said polymeric compound of Aluminium is 0.1 to 2.8.

8. A method as claimed in claim 7 wherein said polymeric compound of Aluminium is Polyaluminium chloride, Polyaluminium sulphate, Aluminium chlorohydrate or Polyaluminium chlorosulphate.

9. A method as claimed in any one of the preceding claims wherein said compound of Aluminium is added as an aqueous solution.

10. A method as claimed in any one of the preceding claims wherein ratio of alumina to water is in the range of 1:0.1 to 1:5.

11. Alumina having modified surface characteristics obtainable by a method as claimed in any one of claims 1 to 10.

## Patentansprüche

1. Verfahren zum Modifizieren der Oberflächeneigenschaften von Aluminiumoxid, wobei das Verfahren die Schritte umfasst:
(i) Ausbilden einer wässrigen Mischung, die ein Gewichtsteil Aluminiumoxid und eine monomere oder polymere Aluminiumverbindung, äquivalent 0,001 bis 0,1 Gewichtsteilen des Aluminiumgehalts, umfasst,
(ii) Äquilibrieren der Mischung für mindestens fünf Minuten,
(iii) Anheben des pH der Mischung auf 6 bis 8 und
(iv) Trocknen der Mischung,
wobei das Verfahren einen zusätzlichen Schritt des Anhebens des pH der Mischung auf 3,0 bis 5,0 zwischen den Schritten (i) und (ii) umfasst, wenn die Aluminiumverbindung monomer ist.

2. Verfahren, wie in einem vorhergehenden Anspruch beansprucht, wobei die Löslichkeit der monomeren oder polymeren Aluminiumverbindung mindestens 2 mg/100 g Wasser bei 20°C bei 1 Atmosphäre Druck beträgt.

3. Verfahren, wie im Anspruch 1 oder 2 beansprucht, wobei die monomere Aluminiumverbindung Aluminiumchlorid, Aluminiumnitrat oder Aluminiumsulfat ist.

4. Verfahren, wie in irgendeinem der vorhergehenden Ansprüche beansprucht, wobei die wässrige Mischung eine monomere oder polymere Aluminiumverbindung umfasst, äquivalent 0,01 bis 0,05 Gewichtsteilen des Aluminiumgehalts.

5. Verfahren, wie in irgendeinem der vorhergehenden Ansprüche beansprucht, wobei die Partikelgröße des Aluminiumoxids 0,05 mm bis 2 mm beträgt.

6. Verfahren, wie in irgendeinem der vorhergehenden Ansprüche beansprucht, wobei die Oberflächenladung des Aluminiumoxids mindestens -40 mV beträgt.

7. Verfahren, wie in irgendeinem der vorhergehenden Ansprüche beansprucht, wobei der B-Wert der polymeren Aluminiumverbindung 0,1 bis 2,8 beträgt.

8. Verfahren, wie im Anspruch 7 beansprucht, wobei die polymere Aluminiumverbindung Polyaluminiumchlorid, Polyaluminiumsulfat, Aluminiumchlorhydrat oder Polyaluminiumchlorsulfat ist.

9. Verfahren, wie in irgendeinem der vorhergehenden Ansprüche beansprucht, wobei die Aluminiumverbindung als wässrige Lösung zugefügt wird.

10. Verfahren, wie in irgendeinem der vorhergehenden Ansprüche beansprucht, wobei das Verhältnis des Aluminiumoxids zu Wasser in dem Bereich von 1:0,1 bis 1:5 liegt.

11. Aluminiumoxid mit modifizierten Oberflächeneigenschaften, erhältlich durch ein Verfahren, wie in irgendeinem der Ansprüche 1 bis 10 beansprucht.

## Revendications

1. Procédé de modification de caractéristiques de surface d'alumine, ledit procédé comprenant les étapes de :
(i) formation d'un mélange aqueux comprenant une partie en masse d'alumine et un composé d'aluminium monomère ou polymère équivalent à de 0,001 à 0,1 partie en masse de teneur d'alumine ;
(ii) équilibrage du mélange pendant au moins cinq minutes ;
(iii) augmentation du pH du mélange à de 6 à 8 ; et,
(iv) séchage dudit mélange,
où ledit procédé comprend une étape supplémentaire d'augmentation du pH du mélange à de 3,0 à 5,0 entre les étapes (i) et (ii) lorsque ledit composé d'aluminium est monomère.

2. Procédé selon l'une quelconque des revendications précédentes, dans lequel la solubilité dudit composé d'aluminium monomère ou polymère est d'au moins 2 mg/100 g d'eau à 20°C à une pression de 1 atmosphère.

3. Procédé selon la revendication 1 ou 2, dans lequel ledit composé d'aluminium monomère est le chlorure d'aluminium, le nitrate d'aluminium ou le sulfate d'aluminium

4. Procédé selon l'une quelconque des revendications précédentes, dans lequel ledit mélange aqueux comprend un composé d'aluminium monomère ou polymère équivalent à de 0,01 à 0,05 partie en masse de teneur d'aluminium.

5. Procédé selon l'une quelconque des revendications précédentes, dans lequel la taille de particules de ladite alumine est de 0,05 mm à 2 mm.

6. Procédé selon l'une quelconque des revendications précédentes, dans lequel la charge de surface de ladite alumine est d'au moins -40 mV.

7. Procédé selon l'une quelconque des revendications précédentes, dans lequel la valeur B dudit composé d'aluminium polymère est de 0,1 à 2,8.

8. Procédé selon la revendication 7, dans lequel ledit composé d'aluminium polymère est le poly(chlorure d'aluminium), poly(sulfate d'aluminium), chlorohydrate d'aluminium ou poly(chlorosulfate d'aluminium).

9. Procédé selon l'une quelconque des revendications précédentes, dans lequel ledit composé d'aluminium est ajouté comme une solution aqueuse.

10. Procédé selon l'une quelconque des revendications précédentes, dans lequel le rapport alumine à eau se trouve dans l'intervalle de 1:0,1 à 1:5.

11. Alumine présentant des caractéristiques de surface modifiées pouvant être obtenues par un procédé selon l'une quelconque des revendications 1 à 10.
